# NEUE EUROPÄISCHE PATENTSCHRIFT

(11) **EP 1 074 529 B2**
(45) Veröffentlichungstag und Bekanntmachung des Hinweises auf die Entscheidung über den Einspruch: **30.08.2006**
(45) Hinweis auf die Patenterteilung: 29.01.2003
(21) Anmeldenummer: 00115219.8
(22) Anmeldetag: 13.07.2000
(51) Int. Cl.: C04B 35/101, C04B 35/66

(54) **Feuerfester Formkörper sowie feuerfester Versatz und Verfahren zur Herstellung eines Formkörpers für metallurgische Prozesse**
Refractory article, refractory composition and method for manufacturing a refractory article for metallurgical processes
Pièce réfractaire, composition réfractaire et procédé de fabrication de pièce réfractaire à usage métallurgique

(30) Priorität: 02.08.1999 DE 19936292
(43) Veröffentlichungstag der Anmeldung: 07.02.2001
(73) Patentinhaber: Refratechnik Holding GmbH, 85737 Ismaning (DE)
(72) Erfinder: Bartha, Peter, Dr., 37120 Bovenden (DE); Jansen, Helge, Dr., 37133 Friedland (DE)
(74) Vertreter: Patentanwälte Dr. Solf & Zapf

(56) Entgegenhaltungen:
- SINGH, V. K. ET AL: "Calcium aluminate cement and refractory castables" TRANS. INDIAN CERAM. SOC. (1993), 52(4), 146-9 , XP001020786
- SARPOOLAKY H ET AL: "MICROSTRUCTURAL EVOLUTION ON FIRING LOW CEMENT CASTABLE REFRACTORIES" INSTITUTE OF PHYSICS CONFERENCE SERIES, IOP PUBLISHING,, GB, 1999, Seiten 397-400, XP001019620 ISSN: 0951-3248
- DYSON, D. J. ET AL: "Identification of beta - alumina type phases" TRANS. J. BRIT. CERAM. SOC. (1973), 72(2), 49-55 , XP002174895
- "Feuerbeton und betonartige feuerfeste Massen und Materialien" von Prof. Dr. rer.nat. A. Petzold und Doz. Dr.-In habil. J. Ulbricht, Deutscher Verlag für Grundstoffindustrie, Leipzig Stutgart, 1. Auflage 1994.
- "Tonerdereiche Feuerfestbetone für den Einsatz in der Stahlindustrie", Dissertation von Andreas Buhr, (1996) - Bibliotek der Vereins Deutscher Eisenhüttenleute (VDEh), Düsseldorf.

## Beschreibung

Die Erfindung betrifft einen feuerfesten Formkörper sowie ein en Versatz, insbesondere zur Herstellung eines feuerfesten Formkörpers für metallurgische Prozesse nach Anspruch 16, und ein Verfahren zum Herstellen des Versatzes und des Formkörpers nach Anspruch 34.

In der Eisen-, Stahl-und NE-Metallindustrie werden die verwendeten Reaktions- und Transportgefäße mit feuerfestem Material ausgemauert oder mit sogenannten Stampfmassen ausgekleidet. Derartige Gefäße sind im Roheisenbereich beispielsweise Torpedopfannen, oder Roheisenpfannen und im Stahlbereich Konverter wie Aufblas- oder bodenbiasende Konverter, in denen aus dem Roheisen Rohstahl gewonnen wird. Femer werden sogenannte Stahlgießpfannen und Behandlungspfannen für sekundärmetallurgische Prozesse (Stahlveredetung) aber auch nachfolgende Baueinheiten entsprechend feuerfest ausgekleidet.

Im Verlauf der Erzeugung von Stahl über den Hochofen und Blaskonverter ändem sich die Schlackenzusammensetzung und der pH-Wert (Basizität) der Schlacken erheblich. Während Roheisen eine saure bis neutrale Schlacke (c/s < 1,5) aufweist, sind Konverter- und Pfannenschlacken basisch. Außerdem werden bestimmte Spezialstähle, Legierungen, wie Ferrochrom und Ferronickel sowie Nichteisenmetalle mit Schlacken erzeugt, welche im Laufe des Prozesses ihren pH-Wert bzw. Ihre Basizität ändem. Ferner ist es üblich, daß die metallurgischen Gefäße sowohl bei Güten verwendet werden, die mit sauren als auch mit basischen Schlacken abgedeckt sind.

Zur Auskleidung der metallurgischen Gefäße für den Roheisenbereich (Torpedopfanne, Roheisenpfanne) werden vorzugsweise gebrannte oder phenolharz- oder pechgebundene Steine auf der Basis von Tonerde (Al₂O₃) oder Andalusit verwendet Im Bereich der Stahlerzeugung ist es üblich, phenolharz oder pechgebundene Steine bzw. Auskleidungen auf der Basis Magnesia (MgO) und Graphit einzusetzen. Derartige Steine bzw. Massen weisen einen hohen Anteil des Kohlenstoffträgers (Graphit) auf, wobei der Kohlenstoff nicht nur durch den Graphit, sondern auch durch den Kunstharzbinder bzw. Teer oder Pech ausgebildet wird.

Die Aufgaben der Kohlenstoffträger sind komplex. Kohlenstoff hat jedoch im wesentlichen die Funktion, die Verschlackung der Formkörper zu minimieren, Indem er die Benetzbarkelt der Oberfläche verringert und zudem offene Poren schließt, welche ein Eindringen durch Kapillar-Kräfte erleichtern können.

Im Gebrauch verschleißen feuerfeste Formkörper aufgrund verschiedener Vorgänge. Zum einen ist es bekannt, daß dünne, schlackeinfiltrierte oberflächliche Schichten des Formkörpers durch Auflösung und Abtragung bzw. Abplatzung verschleißen. Man spricht von einem thermomechanischen Verschleiß. Dieser Verschleiß wird extrem verstärkt, wenn ein Stein mit neutralem bis saurem Grundstoff (Tonerde, Andaluslt, Schamotte, etc.) mit basischen Schlakken in Kontakt tritt. Zwischen den basischen Schlacken und den neutralen bis sauren Steinen kommt es zu einer heftigen Reaktion, die zur schnellen Zerstörung, insbesondere durch Auflösung des feuerfesten Steines führt. Umgekehrt reagieren Steine mit basischen Basismaterial (Magnesia, Magnesia-Kohlenstoff, Dolomit, etc.) heffig mit neutralen bis sauren Schlacken, was jeweils ebenfalls zu einer umgehenden Zerstörung des Steins durch Abtragung bzw. Auflösung führt.

Hieraus folgt, daß entsprechende metallurgische Gefäße je nach Schlackenzusammensetzung gewechselt werden müssen oder aber, daß in Prozessen, wo dieses nicht möglich ist oder die Gefäße zur Erzeugung unterschiedlicher Produkte verwendet werden müssen, ein extremer Verschleiß der feuerfesten Auskleidung der Gefäße hingenommen werden muß.

Ein Steintypus, der eine gewisse Beständigkeit gegenüber Schlacken mit unterschiedlichen pH-Werten bzw. mit wechselnden pH-Werten (Basizitäten) aufweist, ist der Chrommagnesiastein, auch Magnesiachromitstein genannt. Der Chrommagnesiastein wird im wesentlichen aus Magnesia (MgO) und Chromerz ausgebildet, wobei derartige Steine üblicherweise im keramischen Brand hergestellt werden. Durch seine Eigenschaft, wechselnde Basizitäten gut verkraften zu können, ist er z.B. bei der Erzeugung von Nichteisenmetallen zur Zeit praktisch konkurrenzlos. Der Chrommagnesiastein hat bei seinen guten Anwendungseigenschaften jedoch einen gravierenden Nachteil. Das in dem Stein vorhandene Chrom wird während des Gebrauchs zu Cr⁶⁺ oxidiert. Cr⁶⁺ ist jedoch zum einen toxisch und zum anderen wasserlöslich. Die Entsorgung dieser Steine ist daher sehr problematisch, da in einer normalen Deponie das Cr⁶⁺ austritt und sich im Sickerwasser wiederfindet. Zudem bestehen Gesundheitsgefahren beim Ausbrechen derartiger Ausmauerungen, da das Cr⁶⁺ auch auf die Haut wirkt. Bei den ständig steigenden Umweltauflagen und Auflagen bezüglich der Arbeitshygiene ist daher zu erwarten, daß der Entsorgungsaufwand dieses Materials auf Dauer in keinem vernünftigen Verhältnis zu seinem Nutzen mehr steht.

Aus "Calcium aluminate cement and refractory castables", V.K. Singh et al., Transactions of the Indian Ceramic Society (1993) ist es bekannt, hochtonerdehaltige Zemente, sog. Tonerdezemente oder Tonerdeschmelzzemente im feuerfesten Bereich zu verwenden. Feuerfeste Zemente reagieren mit Wasser bei Raumtemperatur und bilden harte, festere Materialien, welche auf hohe Temperaturen ohne Rißbildung und Abplatzungen aufgeheizt werden können. In der Praxis werden diese Zemente mit feuerfesten Zuschlägen vermischt; diese Mischungen sind bekannt als feuerfeste Betonmischungen. Tonerde (Al₂O₃) ist ein guter Zuschlagstoff, da er bei hohen Temperaturen mit der Zementmatrix unter Bildung einer hochfeuerfesten keramischen Masse reagiert. Feuerfeste Betone bieten gegenüber konventionellen Feuerfestprodukten den Vorteil, daß sie schnell anwendbar sind sowie kostengünstig sind. Durch Spritzverfahren kann der angemischte Beton an die Stelle geschossen werden, die von Ihm bedeckt werden soll. Obwohl der Tonerdezement sowohl bei hohen als auch bei niedrigen Temperaturen sehrfest ist, ist er im Bereich der mittleren Temperaturen häufig schwächer, so daß bezüglich der heißen Seite und der kalten Seite einer Schicht von feuerfestem Beton eine schwache Schicht verbleibt Feuerfeste Calciumaluminalbetone werden erfolgreich in der Eisen- und Stahlindustrie sowie in der petrochemischen Industrie, der Glasindustrie und der keramischen Industrie verwendet.

Der Erfindung liegt die Aufgabe zugrunde, ein feuerfestes Material zu schaffen, das eine hohe Bestän digkelt gegenüber Schlakken mit den unterschiedlichsten Zusammensetzungen, insbesondere unterschiedlichen bzw. wechselnden pH-Werten (Basizitãten) bei gleichzeitiger unproblematischer Handhabung und unproblematischer Entsorgung aufweist.

Die Aufgabe wird durch ein feuerfestes Material gelöst, das als Hauptkomponente ein mineralisches oxidisches Material aufweist, welches sich chemisch aus 80 bis 99 % Al₂O₃ und 1 bis 20 % CaO zusammensetzt, wobei das mineralische oxidische Material des einsatzberelten Steins ein Phasengemenge aus α-Al₂O₃, β-Al₂O₃, Calcium-hexaaluminat (CA₆) und Calclumdialuminat (CA₂) aufweist, die in Anteilen zwischenjeweils 2 und 50 %, vorzugsweise zwischen jeweils 20 und 30 % enthalten sind. Der Rohstoff kann gesintert oder geschmolzen eingesetzt werden. Der Stein kann keramisch gebrannt oder mit Graphit, Ruß oder anderen Kohlenstoffträgen zwischen und 1 und 20 % versetzt und.mlt Kunstharzoder Pech gebunden verwendet werden. Femer kann der Versatz sowohl geformt, also zu Steinen verpreßt oder ungeformt, insbesondere als Stampf- oder Reparaturmasse verarbeitet werden. Alle Prozentangaben sind Masseprozente (M%).

Bei dem erfindungsgemäßen Versatz bzw. aus dem erfindungsgemäßen Material hergestellten Formkörpern ist von Vorteil, daß das spezielle Phasengemisch weder mit sauren noch mit neutralen oder basischen Schlacken eine nennenswerte Reaktion eingeht. Hierdurch wird vermieden, daß sich aus dem mineralischen oxidischen Material und der Schlacke während des Einsatzes nichtfeuerfeste oder weniger feuerfeste Verbindungen bilden, die mit der Schlakke abgespült werden können, Insofern weist das erfindungsgemäße Material eine überragenden und vorher nicht gekannte Korrosionsfestigkeit auf. Diese Korrosionsfestigkeit kann in Verbindung mit Kohlenstoffträgern in Verbindung mit einer Pechund/oder Harzbindung noch weiter gesteigert werden. Die Verschleißresistenz derartiger Steine liegt in einem Bereich, der mit keinem bekannten feuerfesten Material vorher zu erreichen war. Insbesondere kann eine Verbesserung des Korrosionsverhaltens erreicht werden, welche über der liegt, die beim Einsatz von Kohlenstoff in anderen Steinsorten erreichbar ist. Es ist daher ein synergistischer Effekt zwischen dem speziellen Phasengemisch und dem Kohlenstoff anzunehmen. Ein weiterer entscheidender Vorteil ist, daß das Material nach dem Einsatz gefahrlos für das Personal aus- bzw. abgebrochen werden kann, da von dem Rohstoff auch nach dem Einsatz keine bekannten Gefahren ausgehen. Femerverhätt sich das ausgebrochene Material auch auf Deponien unproblematisch.

im folgenden wird die Erfindung anhand einer Abbildung mit mehreren Figuren beispielhaft erläutert. Es zeigen dabei:
- Fig. 1: ein vergrößertes Schliffbild der Kontaktzone zwischen einer eisenreichen neutralen Schlacke und dem erfindungsgemäßen Material nach dem Einsatz;
- Fig. 2: ein Schliffbild wie in Fig. 1, wobei die Schlacke basisch ist;

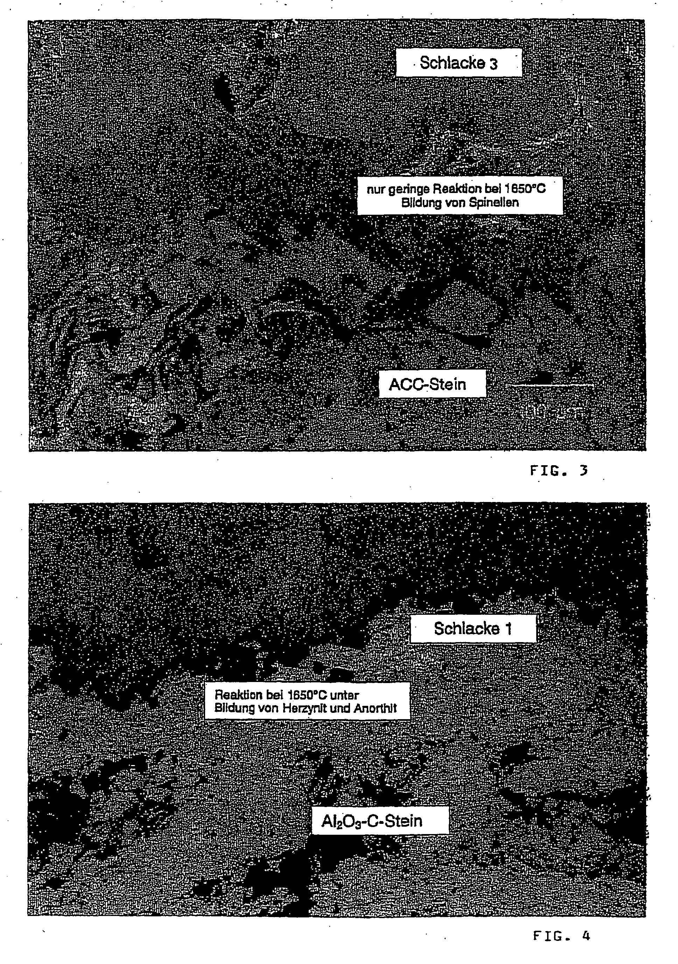

- Fig. 3: ein weiteres Schliffbild gemäß Fig. 1;
- Fig. 4: ein Schliffbild zeigend die Kontaktzone zwischen einer eisenreichen neutralen Schlacke und einem Al₂O₃-C-Material;

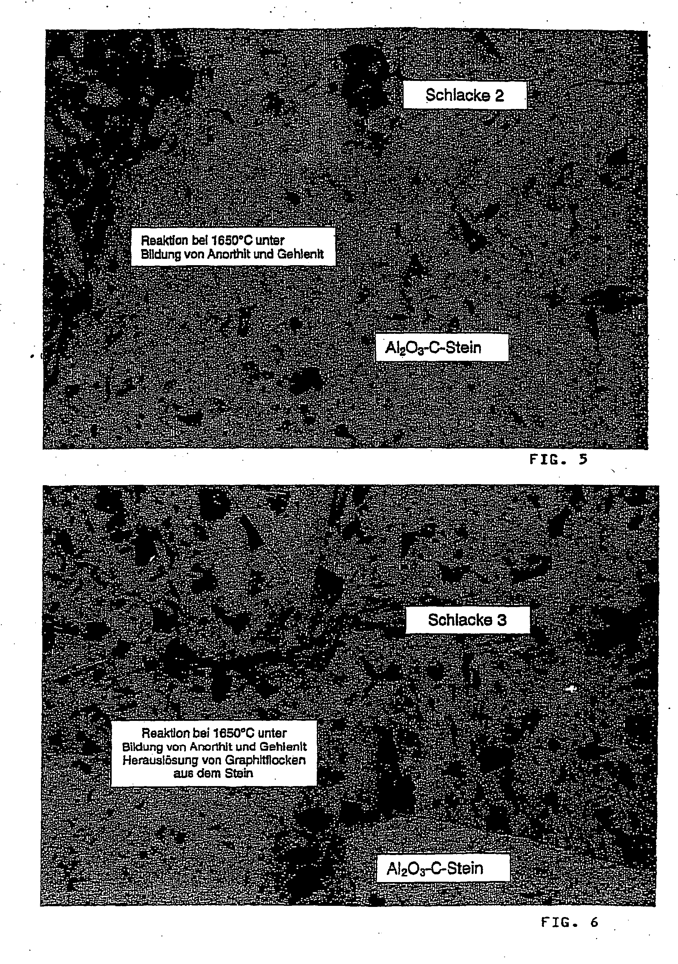

- Fig. 5: ein Schliffbild gemäß Fig. 4, wobei eine basische Schlacke verwendet wurde;
- Fig. 6: ein Schliffbild nach Fig. 5, wobei eine saure Schlacke verwendet wurde;

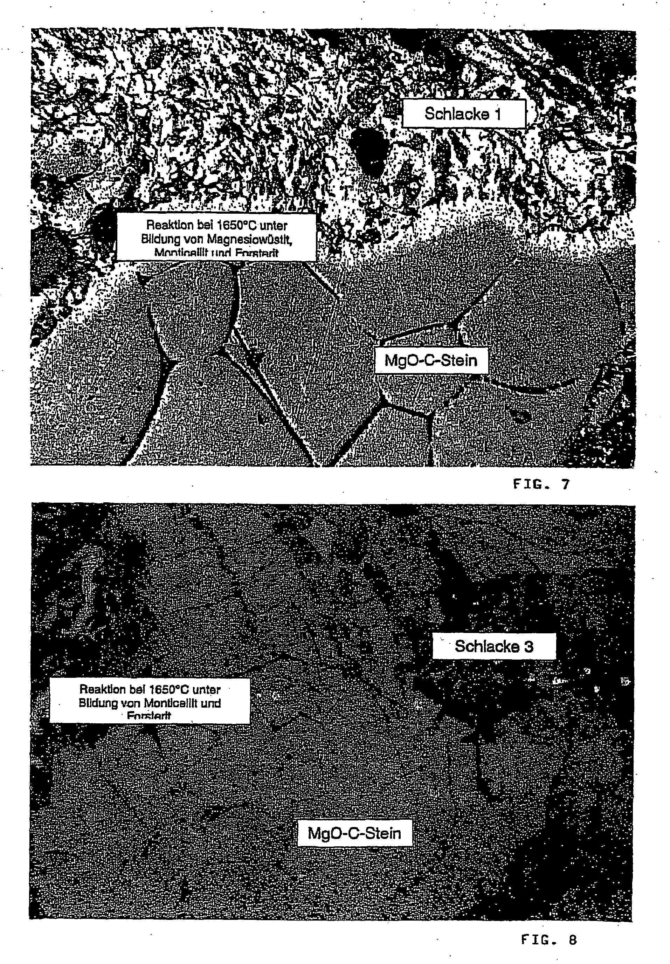

- Fig. 7: ein Schliffbild, zeigend die Kontaktzone zwischen einer neutralen eisenreichen Schlacke und einem MgO-C-Material nach dem Einsatz;
- Fig. 8: ein Schliffbild gemäß Fig. 7, wobei eine saure Schlacke verwendet wurde.

Als Ausgangsrohstoffe bzw. als Basis für die Herstellung und als wesentlicher Bestandteil des Versatzes werden Aluminiumoxid und Calciumoxid verwendet. Insbesondere wird das Aluminiumoxid durch handelsübliche Tabular-Tonerde und der Kalk durch handelsüblichen gebrannten, insbesondere hartgebrannten Kalk zur Verfügung gestellt. Diese in der Steine- und Erden-Industrie ansich üblichen Rohstoffe weisen somit die für diese Rohstoffe üblichen Verunreinigungen auf. Die Verunreinigungen bezogen auf die fertige Mischung aus-Tonerde und Kalk soll 5% nicht übersteigen, wobei sie sich aus max. 3 % SiO₂, max. 3 % Fe₂O₃ und max. 3 % Mg0 sowie max. 3 % TiO₂ zusamrnensetzen können.

Für die Welterverarbeitung der Ausgangsstoffe gibt es mehrere Möglichkeiten. Allen möglichen Verfahren ist gemeinsam, daß die Hauptkomponenten Al₂O₃ und CaO zunächst bis zur Homogenität vermischt werden. Hierbei wird die Mischung derart eingestellt, daß die Rohstoffmischung aus Al₂O₃-CaO (AC) zwischen 80 und 99 % Al₂O₃ und zwischen 1 und 20 % MgO enthält, wobei die zuvor erwähnten Verunreinigungen hierin enthalten sind. Dieser Ausgangsstoff bzw. Zwischenprodukt kann gesintert oder geschmolzen weiterverarbeitet werden.

Beim Sintern wird der Rohstoff auf verschiedenste Arten und Weisen in verschiedene mögliche Formen gepreßt und anschließend Temperaturen ausgesetzt, die ein Sintem, also eine Feststoff-Feststoff-Reaktion zwischen den Bestandteilen ermöglicht. Der gesinterte Rohstoff kann anschließend gegebenenfalls gebrochen bzw. gernahlen und auf eine gewünschte Komgröße und Komverteilung in Fraktionen klassiert werden.

Eine weitere Möglichkeit besteht darin, das Zwischenprodukt im Lichtbogen aufzuschmelzen, die gebildete AC-Schmelze abzukühlen und die abgekühlte Schmelze zu brechen, zu mahlen und entsprechend zu klassieren.

Eine weitere Möglichkeit besteht darin, das Zwischenprodukt zu pelletieren. Hierbei wird die Mischung beispielsweise in einem Pelletier-Mischer oder einem Pelletier-Teller vorgelegt und üblicherweise unter Eindüsung von geeignete Flüssigkelten zu Pellets gerolit, wobei diese Pellets anschließend in die gewünschten Konfraktionen klasssiert werden können. Für das Pelletieren ist es von Vorteil, die Ausgangsstoffe CaO und Al₂O₃ auf eine Feinheit aufzumahlen, die das Pelletieren ermöglicht und zudem nachfolgenden Reaktionen zwischen den Ausgangsstoffen bei hohen Temperaturen gewährleistet.

Eine weitere Möglichkeit besteht darin, die Ausgangsstoffe Al₂O₃ und CaO - ebenfalls vorzugsweise fein aufgemahien - nachdem sie bis zur Homogenität gemischt wurden, einer Brikettierpresse aufzugeben und dort zu Briketts bzw. Tabletten zu verpressen. Hierbei ist es insbesondere möglich, in sehr exakter Weise verschiedene Tabletten bzw. Brikettgrößen zu pressen und hierdurch bereits ein vorbestimmtes Komband bzw. vorbestimmte Korngrö-BenFraktionen zu erzielen.

Bei dem vorsynthetisierten AC-Material, d.h. dem durch Sintern oder Schmelzen gewonnenen AC bll det sich durch das Vorsynthetisierungsverfahren ein Phasengemisch aus α-Al₂O₃, β-Al₂O₃, CA₆ (Calciumhexaaluminat) und CA₂ (Calciumdlaluminat) aus. Die jeweiligen Mineralphasen können in Anteilen zwischen 2 und 50 % in dem Ausgangsstoff vorhanden sein. Diese vorsynthetisierte Material findet insbesondere dort als Rohstoff seinen Einsatz, wo aus diesem Ausgangsmaterial unter Hinzufügung eines Kohlenstoffträgers wie Graphit oder Ruß sowie eines Harzes oder von Pech als Binder ein ungebrannter kohlenstoffhaltiger Stein bzw. ein ungebranntes kohlenstoffhattiges Material (AC-C) erzeugt werden soll.

Das vorsynthetisierte Material wird Insbesondere auf die nachfolgende Art und Weise welterverarbeitet.

Zur Herstellung des Versatzes wird das Komband aus mehreren Kornfraktionen zusammengesetzt. Anschlie-Bend wird dieses Komband bis zur Homogenität gemischt und während des Mischens dertrockene Kohlenstoffträger wie Graphit oder Ruß zugesetzt, Sollen Formkörper mit einer Einkomponenten-Harzbindung (Resolharz) erzielt wer den, wird anschließend in den kalten Mischer das Einkomponentenharz zugegeben und bis zur Homogenität gemischt. Wird eine Harz-Härtermischung (Novolak-Harz) verwendet, wird zunächst das Harz mit dem Härter vorgemischt und gemeinsam zugegeben oder zunächst nur das Harz und dann der Härter zugegeben undjeweils bis zur Homogenität gemischt. Die fertige Versatzmischung wird den in der Feuerfest-Industrie üblichen Pressen zugeführt und dort zu Formkörpern verpreßt, beispielsweise mit einem Preßdruck von 180 N/mm².

Bei der Verwendung von Kunstharzen zur Bindung beträgt deren Anteil am Gesamtversatz 1 bis 5 Masse-%, insbesondere bevorzugt 2 bis 3 Masse-%. Der Hauptkohlenstoffträger, insbesondere in Form von Ruß und/oder Graphit liegtzwischen 0,5 und 30 Masse-%, insbesondere bevotzugtzwischen 11 und 15 Masse-%. Zur Verbesserung der Gebrauchseigenschaften der kohlenstoffhaltigen Formkörpern können zusätzlich noch Antioxidantien, insbesondere in Form von Metallen wie Al, Mg oder Si. Gleichwirkend sind auch Carbide, Boride und Nitride.

Die fertiggestellten, harzgebundenen Formkörper werden anschließend dem für diese Technologie üblichen Temper-bzw. Härtungsschritt bei Temperaturen zwischen 120°C und 200 °C unterworfen.

Soll eine Pechbindung des Versatzes erzielt werden, werden die Verfahrensschritte bis zurfertigen Mischung der festen Bestandteile, inklusive eventuell notwendiger Nebenbestandteile wie Antioxidantien und weiterer bekannter Nebenbestandteile durchgeführt. Anschließend wird diese Vormischung in einen beheizten Mischer gegeben, wo der Mischung Pech zugeführt und bis zur Homogenltät vermischt wird. Es wird insbesondere ein Pechgehalt von 1 bis 5 % angestrebt Nach der Homogenisierung des Pechs oder dabei werden die Vemetzer für Pech zugegeben, insbesondere Schwefel und/oder Nitrat. Nach dem Verpressen auf den für diese Technologie üblichen Pressen, insbesondere beheizten Pressen werden die erzielten Formkörper einem Temperschrltt bel 200 bis 300 °C unterworfen, wobei das Pech mit Hilfe der Vemetzungsmittel vernetzt.

Die auf die genannten Weisen erzielen Formkörper sind anschließend einsatzbereit und können an den entsprechenden Stellen im Ofen, Konverter bzw. Pfannen eingebaut werden.

Selbstverständlich kann auch vorsynthetisierter AC nach dem zuvor beschriebenen Verfahren zu keramisch gebrannten (direktgebundenen) Steinen verarbeitet werden.

Die Erfindung wird im folgenden anhand von Beispielen erläutert.

### Beispiel 1: Kunstharz gebundener Formkörper

Die Ausgangsstoffe Tabular-Tonerde und gebrannter und/oder gelöschter Kalk (gemahlen) werden im angelieferten Zustand in einem Mischer vorgelegt und bis zur Homogenität gemischt. Die Mischung wird einem Elektro-Lichtbogen-Aggregat aufgegeben und im Lichtbogen erschmolzen. Die schmelzflüssige Mischung wird ausgegossen und mit Hilfe von Metall-Trommeln oder mit Hilfe von größeren Metallflächen unter Normalbedingungen, d.h. an der Luft abgekühlt Die abgekühlte, kristallisierte Schmelze wird anschließend gebrochen und gemahlen. Der gemahlene Ausgangsstoff (AC) wird klassiert und in Komfraktionen zerlegt. Aus den Komfraktionen wird ein gewünschtes Komband mit einer gewünschten minimalen und maximalen Komgröße, insbesondere aus einer Mehlfraktion, einer Fein-und Feinstkornfraktion und einer Grobkornfraktion zusammengesetzt und in einem Mischervorgelegt. Die Mischungsfraktionen werden im Mischer bis zur Homogenität gemischt und anschließend 10% Graphit zugegeben und bis zur Homogenisierung des Graphits in der Ausgangsmischung weitergemischt. Schließlich werden 3 % Phenolharz zugegeben und ebenfalls bis zur Homogenisierung weitergemischt. Der so erhaltene Rohversatz wird einer hydraulischen Presse aufgegeben und mit 160 MPa Enddruck zu Formkörpern verpteßt. Die Formkörperwerden anschließend einem Temperschritt bei 120 bis 200°C gehärtet.

In äquivalenter Weise, insbesondere nach der für diese Formkörper üblichen Verfahrensweise werden ein MgO-C und Al₂O₃-C-Stein als Vergleichsstein hergestellt.

Die Zusammensetzung der drei Versätze erglbt sich aus der Tabelle:

| | MgO-C | Al₂O₃-C | Al₂O₃-CaO-C (AC-C-Stein) |
|---|---|---|---|
| Oxid | 87 % MgO*) | 87 % Al₂O₃ **) | 81 % Al₂O₃ **) 6%CaO |
| Graphit | 10% | 10% | 10 % |
| Phenolharz | 3% | 3% | 3% |

| | | | |
|---|---|---|---|
| *) z. B. in Form von Sinter- oder Schmelzmagnesia | | | |
| **) z. B. Tabulartonerde und/oder Schmelzkorund | | | |

Die Eigenschaften der erzielten Formkörper ergeben sich aus der nachfolgenden Tabelle: .

| | MgO-C | Al₂O₃-C | AC-C-Stein |
|---|---|---|---|
| FRD [g/cm³] | 3.03 | 3.14 | 3.03 |
| FRD n.V. [g/cm³] | 3.00 | 3.13 | 2.99 |
| E-Modul [GPa] | 41.00 | 52.53 | 33.17 |
| E-Modul n.V. [GPa] | 10.30 | 20.00 | 7.54 |
| offene Porosität [%] | 4.55 | 8.24 | 6.00 |
| offene Porosität n.V. [%] | 10.12 | 12.23 | 11.63 |
| KDF [MPa] | 42.80 | 70.65 | 49.90 |
| KDF n.V.[MPa] | 19.70 | 28.35 | 16.50 |
| KBF[MPa] | 11.50 | 15.45 | 11.41 |
| KBF n.V. [MPa] | 2.35 | 5.33 | 2.96 |
| HBF [MPa] | | | |
| 1000°C | 3.47 | 6.04 | 3.17 |
| 1200°C | 3.18 | 4.65 | 2.51 |
| 1500°C | 2.34 | 3.39 | 2.11 |

Zur Untersuchung der Einsatzeigenschaften, insbesondere zur Untersuchung der Schlacken-Kompatibilität wird mit diesen drei Materialien bzw. Steinen ein sog. Tiegeltest (DIN 51069 Tell II) durchgeführt. Zudem wird zum Vergleich ein direktgebundener Chrommagnesiastein der handelsüblichen Sorte Ankrom B 65 für den Versuch herangezogen.

Zur Durchführung des Vergleichs werden aus den Steinen hohlzylindrische Tiegel mit einem Durchmesser von 50 mm bel einer Tiefe von 50 mm herausgebohrt. Um das Verhalten der Steine gegenüber Schlacken zu prüfen, werden drei Tiegel je einer Steinsorte mit Schlackenpulvem befüllt, wobei ein Stein mit einem eisenreichen neutralen Schlackenpulver, ein Tiegel mit einem stark basischen Schlackenpulver und ein Tiegel mit einem sauren Schlackenpulver befüllt wird. Die Schlackenpulver setzen sich wie aus der nachfolgenden Tabelle ersichtlich zusammen:

| Gehalte [%] | Schlacke 1 | Schlacke 2 | Schlacke 3 |
|---|---|---|---|
| CaCO₃ | 24.0 | 74.0 | 35.0 |
| SiO₂ | 26.8 | 11.0 ' | 50.0 |
| FeO | 49.2 | | 5.0 |
| Al₂O₃ | | 3.7 | 10.0 |
| MgO | | 3.8 | |
| CaF₂ | | 7.5 | |
| Basizität | 1.0 | > 6 | 0.5 |

Die gefüllten Tiegel bzw. die Steine werden anschließend in einen Kammerofen eingesetzt und bei 1 650 °C sechs Stunden thermisch behandelt.

Nach Abschluß des Tiegeltests werden die Tiegel diagonal zersägt und die Eindringtiefe der Schlacke sowie die Reaktion zwischen Schlacke und Tiegelmaterial mikroskopisch analysiert. Das folgenden Diagramm zeigt die Eindringtiefe der flüssigen Schlacken in das Steinmaterial:

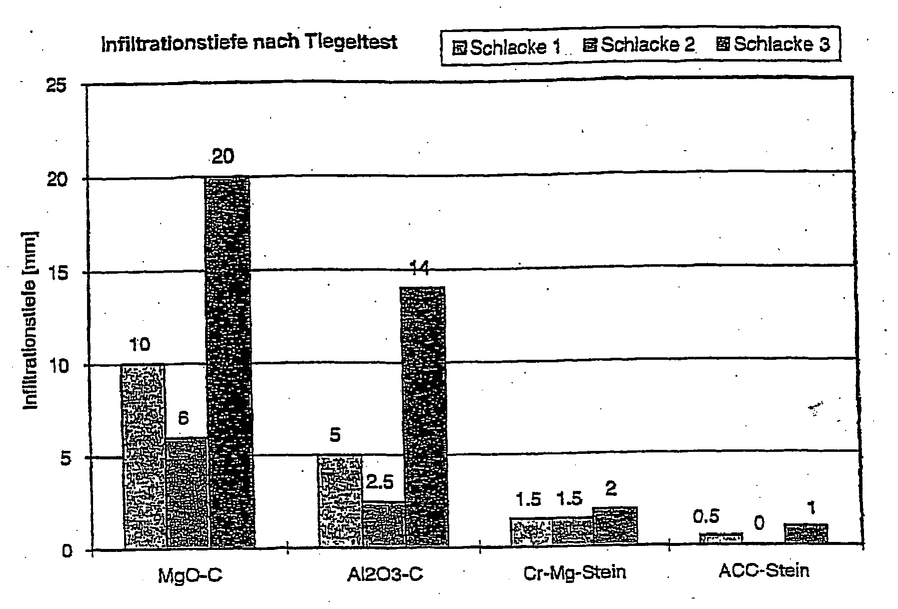

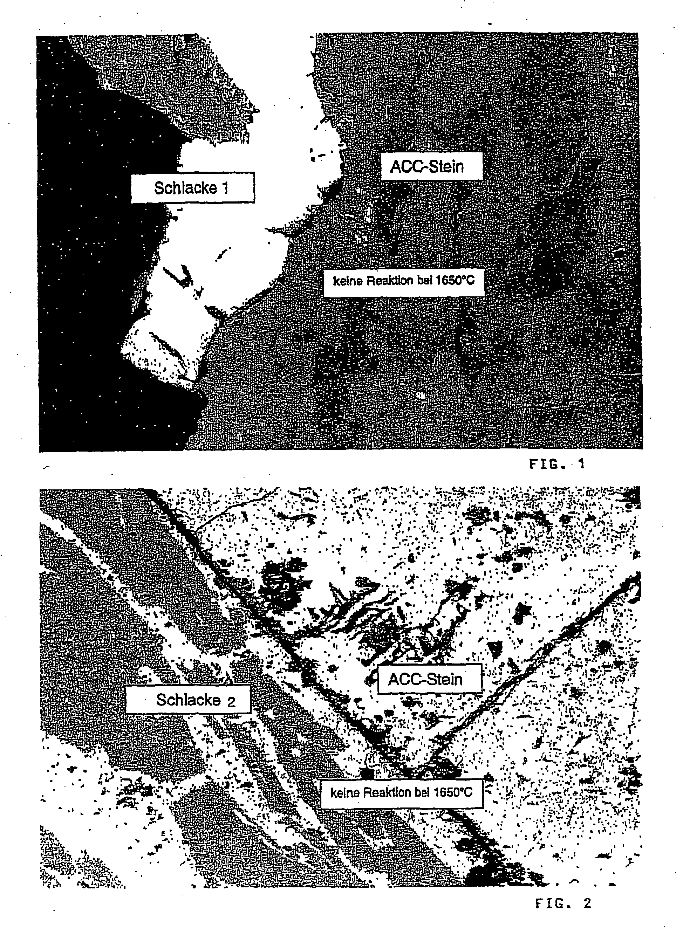

Wie aus dem Diagramm ersichtlich ist, werden die Vergleichsmaterialien je nach Schlackenzusammensetzung mehr oder weniger stark inflltriert. Die geringste Infiltration der der Erfindung gegenüberstellten Vergleichsmaterialien zeigt der Chrommagnesiastein. Aber auch gegenüber dem Chrommagnesiastein zeigt der ACC-Stein eine erheblich geringere Infiltration. Die Begutachtung der Schliffbilder legt dar, daß die Schlacken in den ACC-Stein praktisch nicht eindringen. Die Tiegel sind nach dem Tiegeltest praktisch unversehrt. Darüberhinaus zeigen die Mikrobilder, daß im Vergleich zu den anderen, ökologisch unbedenklichen Testkandidaten MgO-C-und Al₂O₃-C auch eine erheblich geringere Korrosion auftritt. In Fig. 1 und 2 ist zu erkennen, daß eine Reaktion zwischen dem erfindungsgemäßen Material und den angrelfenden Schlacken praktisch nicht stattfindet. Demgegenüber ist aus den Abbildungen 4 bis B ersichtlich, daß die übrigen Materialien in ganz erheblicher Weise sowohl infiltrativ als auch korrosiv angegriffen wurden und die Basismaterialien an der Kontaktzone intensiv umgesetzt wurden.

### Beispiel 2: Keramisch gebrannter Formkörper

In einem weiteren Versuch werden die Vergleichsmaterialien als keramisch gebrannte Steine gegenübergestellt und bei diesen der Tiegeltest durchgeführt. Das heißt in diesem Fall, daß die Materialien Al₂O₃, MgO und das erfindungsgemäße AC-Material unter Abwesenheit von Kohlenstoff mit einer herkömmlichen keramischen Bindung hergestellt werden. Nach dem Tiegeltest kann bei diesem Beispiel festgestellt werden, daß selbstverständlich die Infiltration höher ist, da die Schlackenbremse Kohlenstoff fehlt. Jedoch zeigt das erfindungsgemäße Material auch bei der Abwesenheit von Kohlenstoff die überraschende Eigenschaft, daß eine Korrosion mit den oben erwähnten Schlakken erheblich geringer ausfällt als bei den Vergleichsmaterialien

Die Gründe für diesen überraschenden Effekt sind noch nicht geklärt, wobei bei der AC-Kohlenstoffmischung zudem ein überraschender synergistischer Effekt auftritt. Im Gegensatz zu dem auch aus den anderen Steinmischungen bekannten Effekt der Verringerung der Benetzbarkeit durch die Schlackenbremse Kohlenstoff tritt hier ein noch nicht geklärter Effekt auf, der die Korrosions-Resistenz des Basismaterials weiter erhöht.

Bei dem erfindungsgemäßen mineralischen oxidischen Grundstoff bzw. bei daraus hergestellten Formkörper ist von Vorteil, daß das erfindungsgemäße Material erstmalig eine universelle Beständigkeit gegenüber allen Arten metallurgischer Schlecken aufweist, wobei die Beständigkeit gegen jeden einzelnen Schlackentyp die Beständigkeit der normalerweise in diesem Bereich eingesetzten Spezialstsine bei weitem übertrifft. Zudem weist das erfindungsgemäße Material gegenüber anderen universell einsetzbaren Materialien (Chrommagnesia) nicht nur eine deutliche Überlegenheit bezüglich der Korrosions- und Infiltrationsresistenz, sondern insbesondere eine ökologische und arbeltshygienische Unbedenklichkeit auf. Die genannten Vorteile bieten dem Anwender des erfindungsgemäßen Materials als feuerfeste Auskleidung eine massive Kosteneinsparung, da das Material weniger verschleißt, universell einsetzbar ist und zudem unproblematisch entsorgt werden kann.

## Patentansprüche

1. Feuerfester Formkörper aufweisend
a) als feuerfeste Hauptkomponente eine vorsynthetisierte mineralische, oxidische Komponente mit
b) einer chemischen Zusammensetzung aus 80 bis 99 Masse-% Al₂O₃ und 1 bis 20 Masse-% CaO und von 0 bis 5 Masse- % übliche Verunreinigungen, wobei
c) die mineralische, oxidische Komponente im Wesentlichen ein Mineralphasengemenge von α-Al₂O₃, β-Al₃O₃, Calciumhexaaluminat (CA₆) und Calciumdialuminat (CA₂) aufweist und
d) die Mineralphasen α-Al₂O₃, β-Al₂O₃, CA₆ und CA₂ in Anteilen von jeweils.2 bis 50 Masse-%, in der mineralischen, oxidischen Komponente enthalten sind.

2. Formkörper nach Anspruch 1;
**dadurch gekennzeichnet, daß**
die Hauptphasen α-Al₂O₃, β-Al₂O₃, CA₆ und CA₂ in Anteilen von Jeweils 20 bis 30 Masse-% in der mineralischen, oxidischen Komponente enthalten sind.

3. Formkörper nach Anspruch 1 und/oder 2,
**dadurch gekennzeichnet, daß**
der Formkörper ein direkt gebundener, keramisch gebrannter Formkörper ist.

4. Formkörper nach Anspruch 1 und/oder 2,
**dadurch gekennzeichnet, daß**
der Formkörper ein pechgebundener, kohlenstoffhaltiger Formkörper ist.

5. Formkörper nach Anspruch 1 und/oder 2,
**dadurch gekennzeichnet, daß**
der Formkörper ein harzgebundener, kohlenstoffhaltiger Formkörper ist.

6. Formkörper nach Anspruch 5,
**dadurch gekennzeichnet, daß**
der Formkörper mit einem Einkomponentenharz gebunden ist.

7. Formkörper nach Anspruch 5,
**dadurch gekennzeichnet, daß**
der Formkörper mit einem Zweikomponentenharz gebunden ist

8. Formkörper nach einem oder mehreren der Ansprüche 4 bis 7,
**dadurch gekennzeichnet, daß**
als Kohlenstoffträger Graphit und/oder Ruß enthalten ist.

9. Formkörper nach einem oder mehreren der Ansprüche 4 bis 8,
**dadurch gekennzeichnet, daß**
0,5 bis 30 Masse-%, insbesondere 11 bis 15 Masse-% Kohlenstoffträger enthalten sind.

10. Formkörper nach einem oder mehreren der Ansprüche 5 bis 9,
**dadurch gekennzeichnet, daß**
1 bis 5 Masse-%, insbesondere 2 bis 3 Masse-% Harz enthalten sind.

11. Formkörper nach einem oder mehreren der Ansprüche 4 bis 10,
**dadurch gekennzeichnet, daß**
metallische Antioxidantien, wie Al, Si oder Mg enthalten sind, Insbesondere in Mengen von 0 bis 10 Masse-%.

12. Formkörper nach einem oder mehreren der Ansprüche 4 bis 11,
**dadurch gekennzeichnet, daß**
55 bis 99 Masse-% des mineralischen, oxidischen Bestandteils enthalten sind.

13. Formkörper nach Anspruch 12,
**dadurch gekennzeichnet, daß**
der mineralische, oxidische Bestandteil in einer fürfeuerfeste Formkörper üblichen Komform, Kornverteilung und minimalen und maximalen Korngröße, insbesondere von 0 bis 10 mm, insbesondere in einer Mehl-, Feinst-,, Fein-und Grobkornfraktion enthalten ist.

14. Formkörper nach Anspruch 3,
**dadurch gekennzeichnet, daß**
90 bis 99 Masse-% des mineralischen, oxidischen Bestandteils enthalten sind.

15. Formkörper nach Anspruch 14,
**dadurch gekennzeichnet, daß**
der mineralische, oxidische Bestandteil in einer für direktgebundene feuerfeste Formkörper üblichen Komform und Komgrößenvertellung, insbesondere mit Korngrößen von 0 bis 10 mm enthalten ist, wobei zumindest eine Mehl-, Fein-, Feinst- und Grobkornfraktion enthalten sind.

16. Versatz enthaltend
a) als Hauptkomponente eine mineralische, oxidische Komponente mit
b) einer chemischen Zusammensetzung aus 80 bis 99 Masse-% Al₂O₃ und 1 bis 20 Masse-% CaO und von 0 bis 5 Masse-% übliche Verunreinigungen, wobei
c) die mineralische, oxidische Komponente im Wesentlichen ein Mineralphasengemenge von α-Al₂O₃, β-Al₂O₃, Calciumhexaaluminat (CA₆) und Calciumdialuminat (CA₂) aufweist.

17. Versatz nach Anspruch 16,
**dadurch gekennzeichnet, daß**
die Hauptphasen α-Al₂O₃, β-Al₂O₃, CA₆ und CA₂ in Anteilen von jeweils 2 bis 50 Masse-%, vorzugsweise 20 bis 30 Masse-% in der mineralischen, oxidischen Komponente enthalten sind.

18. Versatz nach Anspruch 16 und/oder 17,
**dadurch gekennzeichnet, daß**
die mineralische, oxidische Komponente aus einer Mischung von Al₂O₃ und CaO durch Sintern oder Schmelzen vorsynthetisiert ist

19. Versatz nach einem oder mehreren der Ansprüche 16 bis 18,
**dadurch** gekennzelchnet, daß
als Bindemittel Sulfitablauge enthalten ist.

20. Versatz nach einem oder mehreren der Ansprüche 16 bis 18,
**dadurch gekennzeichnet, daß**
als Bindemittel ein Ein- oder Zweikomponentenharz enthalten Ist.

21. Versatz nach Anspruch 20,
**dadurch gekennzeichnet, daß**
1 bis 5 Masse-%, insbesondere 2 bis 3 Masse-% Harz enthalten sind.

22. Versatz nach einem oder mehreren der Ansprüche 16 bis 18,
**dadurch gekennzeichnet, daß**
als Bindemittel Pech enthalten ist

23. Versatz nach Anspruch 22,
**dadurch gekennzeichnet, daß**
das Pech in einer Menge von 1 bis 5 Masse-% enthalten ist.

24. Versatz nach Anspruch 22 und/oder 23,
**dadurch gekennzeichnet, daß**
der Versatz vemetzende Reagenzien für das Pech aufweist.

25. Versatz nach einem oder mehreren der Ansprüche 20 bis 24,
**dadurch gekennzeichnet, daß**
der Versatz Antioxidantien aufweist.

26. Versatz nach Anspruch 25,
**dadurch gekennzeichnet, daß**
die Antioxidantien metallische Antioxidantien wie Silizium und/oder Aluminium und/oder Magnesium sowie Carbide, Boride und Nitride sind.

27. Versatz nach Anspruch 25 und/oder 26,
**dadurch gekennzeichnet, daß**
die metallischen Antioxidantien in einer Menge von 0 bis 10 Masse-% enthalten sind.

28. Versatz nach einem oder mehreren der Ansprüche 20 bis 27,
**dadurch gekennzeichnet, daß**
ein Kohlenstoffträger enthalten ist.

29. Versatz nach Anspruch 28,
**dadurch gekennzeichnet, daß**
der Kohlenstoffträger Graphit und/oder Ruß aufweist.

30. Versatz nach Anspruch 2B und/oder 29,
**dadurch gekennzeichnet, daß**
der Kohlenstoffträger in einer Menge von 0 bis 30 Masse-%, insbesondere 11 bis 15 Masse-% enthalten ist.

31. Versatz nach einem oder mehreren der Ansprüche 16 bis 30,
**dadurch gekennzeichnet, daß**
die mineralische, oxidische Komponente Korngrößen von 0 bis 10 mm aufweist.

32. Versatz nach einem oder mehreren der Ansprüche 20 bis 31,
**dadurch gekennzeichnet, daß**
die mineralische, oxidische Komponente in Mengen von 55 bis 99 Masse-% enthalten ist.

33. Versatz nach einem oder mehreren der Ansprüche 16 bis 19,
**dadurch gekennzeichnet, daß**
die mineralische, oxidische Komponente in Mengen von 90 bis 99 Masse-% enthalten ist.

34. Verfahren zum Herstellen eines Formkörpers nach einem oder mehreren der Ansprüche 1 und/oder 2 sowie 4 bis 12, insbesondere unter Verwendung eines Versatzes nach einem oder mehreren der Ansprüche 16 bis 32,
**dadurch gekennzeichnet , daß**
die durch Sintern oder Schmelzen vorsynthetisierte mineralische, oxidische Komponente gebrochen und/oder gemahlen und entsprechend klassiert wird und ein gewünschtes Kornband aus mehreren Kornfraktionen zusammengesetzt wird und anschließend die Kornfraktionen bis zur Homogenität gemischt werden, wobei während oder nach dem Mischen der Kohlenstoffträger zugemischt wird und weiter bis zur Homogenität gemischt wird, wobei vor, während oder nach dem Mischen ein organisches Bindemittel zugesetzt wird, der Versatz geformt wird und der geformte Körper abhängig vom Bindemittel gehärtet oder getempert wird.

35. Verfahren nach Anspruch 34,
**dadurch gekennzeichnet, daß**
der Mischung aus mineralischem, oxidischen Material und Kohlenstoffträger ein Ein- und/oder Zwelkomponenten-Kunstharz sowie gegebenenfalls Nebenbestandtelle wie Antioxidantien zugemischt werden und die gesamte erziette Mischung anschließend zu Formkörpern verpreßt wird und anschließend einer Härtung bei Temperaturen zwischen 120 und 200 °C unterworfen wird.

36. Verfahren nach Anspruch 34.
**dadurch gekennzeichnet, daß**
die Mischung aus mineralischem, oxidischen Material und Kohlenstoffträger gegebenenfalls in einem beheitzbaren Mischer Pech zugegeben und die gesamte Mischung homogenisiert wird und der Mischung vemetzende Reagenzienfürdas Pech zugegeben werden und anschließend die Mischung zu Formkörpern verpreßt wird und die Formkörper bel einer Temperatur von 200 bis 300 °C anschließend getempert werden, bis das Pech ausreichend vernetzt ist.

37. Verfahren zum Herstellen eines feuerfesten Formkörpers nach einem oder mehreren der Ansprüche 1 bis 3,
**dadurch gekennzeichnet, daß**
Al₂O₃ und CaO gegebenenfalls fein vermahlen, gemeinsam vermischt und anschließend pelletiert, brikettiert, tablettiert oder auf andere Weise entsprechend geformt werden, wobei diese Formlinge unterschiedlicher Größe klassiert und ein gewünschtes Komband aus mehreren klassierten Komfraktionen zusammengesetzt wird und anschließend bis zur Homogenltät gemischt und gegebenenfalls ein Bindemittel wie Sulfitablauge zugegeben wird und die gesamte Mischung anschließend zu Formkörpern verpreßt wird, wobei die Formkörper nach dem Verpressen einem keramischen Brand bei bis zu 1750 °C unterworfen werden.

38. Verwendung eines Versatzes nach einem oder mehreren der Ansprüche 16 bis 33 zur Herstellung von gepreßten Formkörpern.

39. Verwendung eines Versatzes nach einem oder mehreren derAnsprüche 16 bis 33 zur Herstellung von gestampften Formkörpern.

40. Verwendung eines Versatzes nach einem oder mehreren der Ansprüche 16 bis 33 als Stampf-, Spritz- oder Reparatunnasse.

## Claims

1. Refractory shaped body, including
a) as main refractory component, a presynthesized, mineral, oxidic component with
b) a chemical composition comprising 80 to 99% by mass of Al₂O₃ and 1 to 20% by mass of CaO and from 0 to 5% by mass of standard impurities,
c) the mineral, oxidic component substantially having a mineral-phase mix of α-Al₂O₃, β-Al₂O₃, calcium hexaaluminate (CA₆) and calcium dialuminate (CA₂), and
d) the mineral phases α-Al₂O₃, β-Al₂O₃, CA₆ and CA₂ are present in fractions of in each case 2 to 50% by mass in the mineral, oxidic component.

2. Shaped body according to Claim 1, **characterized in that** the main phases α-Al₂O₃, β-Al₂O₃, CA₆ and CA₂ are present in fractions of in each case 20 to 30% by mass in the mineral oxidic component.

3. Shaped body according to Claim 1 and/or 2,
**characterized in that** the shaped body is a directly bonded, ceramic fired shaped body.

4. Shaped body according to Claim 1 and/or 2,
**characterized in that** the shaped body is a pitch-bonded, carbon-containing shaped body.

5. Shaped body according to Claim 1 and/or 2,
**characterized in that** the shaped body is a resin-bonded, carbon-containing shaped body.

6. Shaped body according to Claim 5, **characterized in that** the shaped body is bonded with a single-component resin.

7. Shaped body according to Claim 5, **characterized in that** the shaped body is bonded with a two-component resin.

8. Shaped body according to one or more of Claims 4 to 7, **characterized in that** graphite and/or soot is present as carbon carrier.

9. Shaped body according to one or more of Claims 4 to 8, **characterized in that** 0.5 to 30% by mass, in particular 11 to 15% by mass, of carbon carrier is present.

10. Shaped body according to one or more of Claims 5 to 9, **characterized in that** 1 to 5% by mass, in particular 2 to 3% by mass, of resin is present.

11. Shaped body according to one or more of Claims 4 to 10, **characterized in that** metallic antioxidants, such as Al, Si or Mg are present, in particular in quantities of 0 to 10% by mass.

12. Shaped body according to one or more of claims 4 to 11, **characterized in that** 55 to 99% by mass of the mineral, oxidic constituent is present.

13. Shaped body according to Claim 12, **characterized in that** the mineral, oxidic constituent is present in a grain shape, grain distribution and minimum and maximum grain size, in particular from 0 to 10 mm, which are customary for refractory shaped bodies in particular in a meal, ultrafine, fine and coarse grain fraction.

14. Shaped body according to Claim 3, **characterized in that** 90 to 99% by mass of the mineral, oxidic constituent is present.

15. Shaped body according to Claim 14, **characterized in that** the mineral, oxidic constituent is present in a grain shape and grain size distribution which are standard for directly bonded refractory shaped bodies, in particular with grain sizes from 0 to 10 mm, with at least one meal, fine, ultrafine and coarse grain fraction being present.

16. Batch, containing
a) as a main component, a mineral, oxidic component with
b) a chemical composition comprising 80 to 99% by mass of Al₂O₃ and 1 to 20% by mass of CaO, and from 0 to 5% by mass of standard impurities,
c) the mineral, oxidic component having substantially a mineral phase mix of α-Al₂O₃, β-Al₂O₃, calcium hexaaluminate (CA₆) and calcium dialurninate (Ca₂).

17. Batch according to Claim 16, **characterized in that** the main phases α-Al₂O₃, β-Al₂O₃, CA₆ and CA₂ are present in fractions of in each case 2 to 50% by mass, preferably 20 to 30% by mass, in the mineral, oxidic component.

18. Batch according to Claim 16 and/or 17,
**characterized in that** the mineral, oxidic component is presynthesized from a mixture of Al₂O₃ and CaO by sintering or melting.

19. Batch according to one or more of Claims 16 to 18, **characterized in that** sulphite waste liquor is present as binder.

20. Batch according to one or more of Claims 16 to 18, **characterized in that** a single-component resin or a two-component resin is present as binder.

21. Batch according to Claim 20, **characterized in that** from 1 to 5b by mass, in particular 2 to 3% by mass, of resin is present.

22. Batch according to one or more of Claims 16 to 18, **characterized in that** pitch is present as binder.

23. Batch according to Claim 22, **characterized in that** pitch is present in an amount of from 1 to 5% by mass.

24. Batch according to Claim 22 and/or 23,
**characterized in that** the batch includes crosslinking reagents for the pitch.

25. Batch according to one or more of Claims 20 to 24, **characterized in that** the batch includes antioxidants.

26. Batch according to Claim 25, **characterized in that** the antioxidants are metallic antioxidants, such as silicon and/or aluminium and/or magnesium and carbides, borides and nitrides.

27. Batch according to Claim 25 and/or 26,
**characterized in that** the metallic antioxidants are present in an amount of from 0 to 10% by mass,

28. Batch according to one or more of Claims 20 to 27, **characterized in that** a carbon carrier is present.

29. Batch according to Claim 28, **characterized in that** the carbon carrier includes graphite and/or soot.

30. Batch according to Claim 28 and/or 29,
**characterized in that** the carbon carrier is present in an amount of from 0 to 30% by mass, in particular 11 to 15% by mass.

31. Batch according to one or more of Claims 16 to 30, **characterized in that** the mineral, oxidic component has grain sizes of from 0 to 10 mm.

32. Batch according to one or more of Claims 20 to 31, **characterized in that** the mineral, oxidic component is present in amounts of from 55 to 99% by mass.

33. Batch according to one or more of Claims 16 to 19, **characterized in that** the mineral, oxidic component is present in amounts of from 90 to 99% by mass.

34. Process for producing a shaped body according to one or more of Claims 1 and/or 2 and 4 to 12, in particular using a batch according to one or more of Claims 16 to 32, **characterized in that** the mineral, oxidic component, which has been presynthesized by sintering or melting, is crushed and/or milled and suitably classified, and a desired grain-size band comprising a plurality of grain fractions is assembled, and then the grain fractions are mixed until homogeneity is achieved, the carbon carrier being admixed during or after the mixing and mixing then continuing until homogeneity is achieved, an organic binder being added before, during or after the mixing, the batch being shaped and the body which has been shaped being hardened or tempered according to the binder.

35. Process according to Claim 34, **characterized in that** a single-component synthetic resin and/or a two-component synthetic resin and, if appropriate, auxiliary constituents, such as antioxidants are admixed with the mixture of mineral, oxidic material and carbon carrier, and the overall mixture obtained is then pressed into shaped bodies and is then subjected to hardening at temperatures between 120 and 200°C.

36. Process according to Claim 34, **characterized in that** the mixture of mineral, oxidic material and carbon carrier is added to pitch, if appropriate in a heatable mixer, and the entire mixture is homogenized, and crosslinking reagents for the pitch are added to the mixture and then the mixture is pressed into shaped bodies and the shaped bodies are then tempered at a temperature of 200 to 300°C until the pitch has sufficiently crosslinked.

37. Process for producing a refractory shaped body according to one or more of Claims 1 to 3, **characterized in that** Al₂O₃ and CaO are if appropriate finely milled, are mixed together and then pelletized, briquetted, tabletted or suitably shaped in some other way, these green bodies of different sizes being classified and a desired grain size band comprising a plurality of classified grain fractions being put together and then mixed until homogeneity is achieved, and if appropriate a binder, such as sulphite waste liquor, being added and the entire mixture then being pressed into shaped bodies, the shaped bodies being subjected to ceramic firing at up to 1750°C after this pressing.

38. Use of a batch according to one or more of Claims 16 to 33 for producing pressed shaped bodies.

39. Use of a batch according to one or more of Claims 16 to 33 for producing rammed shaped bodies.

40. Use of a batch according to one or more of Claims 16 to 33 as a ramming, spraying or repair compound.

## Revendications

1. Comprimé réfractaire, comportant
a) comme composant principal réfractaire un composant minéral de type oxyde synthétisé au préalable, ayant
b) une composition chimique de 80 à 99 % en masse d'Al₂O₃ et de 1 à 20 % en masse de CaO et de 0 à 5 % en masse des impuretés habituelles, dans laquelle
c) le composant minéral de type oxyde est pour l'essentiel constitué d'un mélange de phases minérales d'a-Al₂O₃, de β-Al₂O₃, d'hexaaluminate de calcium (CA₆) et de dialuminate de calcium (CA₂) et
d) les phases minérales a-Al₂O₃, β-Al₂O₃, CA₆ et CA₂ sont contenues chacune en des proportions de 2 à 50 % en masse dans le composant minéral de type oxyde.

2. Comprimé selon la revendication 1,
**caractérisé en ce que**
les phases principales a-Al₂O₃, β-Al₂O₃, CA₆ et CA₂ sont contenues chacune en une quantité de 20 à 30 % en masse dans le composant minéral de type oxyde.

3. Comprimé selon la revendication 1 et/ou 2,
**caractérisé en ce que**
le comprimé est un comprimé à liaison directe, ayant subi une cuisson céramique.

4. Comprimé selon la revendication 1 et/ou 2,
**caractérisé en ce que**
le comprimé est un comprimé lié par de la poix et contenant du carbone.

5. Comprimé selon la revendication 1 et/ou 2,
**caractérisé en ce que**
le comprimé est un comprimé lié par une résine et contenant du carbone.

6. Comprimé selon la revendication 5,
**caractérisé en ce que**
le comprimé est lié par une résine à un composant.

7. Comprimé selon la revendication 5,
**caractérisé en ce que**
le comprimé est lié par une résine à deux composants.

8. Comprimé selon l'une ou plusieurs des revendications 4 à 7,
**caractérisé en ce**
**qu'**il contient en tant que support carboné du graphite et/ou du noir de carbone.

9. Comprimé selon l'une des revendications 4 à 8,
**caractérisé en ce**
**qu'**il contient de 0,5 à 30 % en masse et en particulier de 11 à 15 % en masse d'un support carboné.

10. Comprimé selon l'une ou plusieurs des revendications 5 à 9,
**caractérisé en ce**
**qu'**il contient de 1 à 5 % en masse et en particulier de 2 à 3 % en masse de résine.

11. Comprimé selon l'une ou plusieurs des revendications 4 à 10,
**caractérisé en ce**
**qu'**il contient des antioxydants métalliques tels qu'Al, Si ou Mg, en particulier en des quantités de 0 à 10 % en masse.

12. Comprimé selon l'une ou plusieurs des revendications 4 à 11,
**caractérisé en ce**
**qu'**il contient de 55 à 99 % en masse du constituant minéral de type oxyde.

13. Comprimé selon la revendication 12,
**caractérisé en ce**
**qu'**il contient le constituant minéral de type oxyde sous une forme, une distribution granulométrique et une granulométrie minimale et maximale en particulier de 0 à 10 mm, usuelles pour les comprimés réfractaires, en particulier présentant une fraction granulométrique extrêmement fine, très fine, fine et grossière.

14. Comprimé selon la revendication 3,
**caractérisé en ce**
**qu'**il contient de 90 à 99 % en masse du constituant minéral de type oxyde.

15. Comprimé selon la revendication 14,
**caractérisé en ce**
**qu'**il contient le constituant minéral de type oxyde selon une forme et une distribution granulométrique usuelles pour les comprimés réfractaires à liaison directe, en particulier avec une granulométrie de 0 à 10 mm, et contient au moins une fraction extrêmement fine, très fine, fine et grossière.

16. Barbotine contenant
a) comme composant principal un composant minéral de type oxyde ayant
b) une composition chimique de 80 à 99 % en masse d'Al₂O₃ et de 1 à 20 % en masse de CaO, et de 0 à 5 % en masse des impuretés habituelles, dans lequel
c) le composant minéral de type oxyde comporte pour l'essentiel un mélange de phases minérales d'a-Al₂O₃, de β-Al₂O₃, d'hexaaluminate de calcium (CA₆) et de dialuminate de calcium (CA₂).

17. Barbotine selon la revendication 16,
**caractérisée en ce que**
les phases principales a-Al₂O₃, β-Al₂O_{3,} CA₆ et CA₂ sont présentes dans le composant minéral de type oxyde, chacune en une quantité de 2 à 50 % en masse et de préférence de 20 à 30 % en masse.

18. Barbotine selon la revendication 16 et/ou 17,
**caractérisée en ce que**
le composant minéral de type oxyde est synthétisé au préalable à partir d'un mélange d'Al₂O₃et de CaO, par frittage et fusion.

19. Barbotine selon l'une ou plusieurs des revendications 16 à 18,
**caractérisée en ce**
**qu'**elle contient en tant que liant une lessive de sulfite usée.

20. Barbotine selon l'une ou plusieurs des revendications 16 à 18,
**caractérisée en ce**
**qu'**elle contient en tant que liant une résine à un ou à deux composants.

21. Barbotine selon la revendication 20,
**caractérisée en ce**
**qu'**elle contient de 1 à 5 % en masse et en particulier de 2 à 3 % en masse de résine.

22. Barbotine selon l'une ou plusieurs des revendications 16 à 18,
**caractérisée en ce**
**qu'**elle contient de la poix en tant que liant.

23. Barbotine selon la revendication 22,
**caractérisée en ce**
**qu'**elle contient la poix en une quantité de 1 à 5 % en masse.

24. Barbotine selon la revendication 22 et/ou 23,
**caractérisée en ce que**
la barbotine contient des réactifs réticulants pour la poix.

25. Barbotine selon l'une ou plusieurs des revendications 20 à 24,
**caractérisée en ce que**
la barbotine contient des antioxydants.

26. Barbotine selon la revendication 25,
**caractérisée en ce que**
les antioxydants sont des antioxydants métalliques tels que le silicium et/ou l'aluminium et/ou le magnésium, ainsi que des carbures, des borures et des nitrures.

27. Barbotine selon la revendication 25 et/ou 26,
**caractérisée en ce**
**qu'**elle contient les antioxydants métalliques en une quantité de 0 à 10 % en masse.

28. Barbotine selon l'une ou plusieurs des revendications 20 à 27,
**caractérisée en ce**
**qu'**elle contient un support carboné.

29. Barbotine selon la revendication 28,
**caractérisée en ce que**
le support carboné contient du graphite et/ou du noir de carbone.

30. Barbotine selon la revendication 28 et/ou 29,
**caractérisée en ce que**
le support carboné est présent en une quantité de 0 à 30 % en masse et de préférence de 11 à 15 % en poids.

31. Barbotine selon l'une ou plusieurs des revendications 16 à 30,
**caractérisée en ce que**
le composant minéral de type oxyde a une granulométrie de 0 à 10 mm.

32. Barbotine selon l'une ou plusieurs des revendications 20 à 31,
**caractérisée en ce**
**qu'**elle contient le composant minéral de type oxyde en des quantités de 55 à 99 % en masse.

33. Barbotine selon l'une ou plusieurs des revendications 16 à 19,
**caractérisée en ce**
**qu'**elle contient le composant minéral de type oxyde en des quantités de 90 à 99 % en masse.

34. Procédé pour la fabrication d'un comprimé réfractaire selon l'une ou plusieurs des revendications 1 et/ou 2, ainsi que 4 à 12, en particulier moyennant l'utilisation d'une barbotine selon l'une ou plusieurs des revendications 16 à 32,
**caractérisé en ce que**
le composants minéral de type oxyde intégralement synthétisé par frittage ou fusion est concassé et/ou broyé et soumis à une classification appropriée, puis on compose une bande granulométrique voulue à partir de plusieurs fractions granulométriques, puis on mélange les fractions granulométriques jusqu'à homogénéité, lors de quoi, avant ou après l'opération de mélange, on ajoute le support carboné, et on mélange encore jusqu'à homogénéité, lors de quoi on ajoute un liant organique avant, pendant ou après l'opération de mélange, puis on moule la barbotine, et le comprimé est durci ou recuit en fonction du liant.

35. Procédé selon la revendication 34,
**caractérisé en ce que**
le mélange du matériau minéral de type oxyde et du support carboné est additionné d'une résine synthétique à un ou deux composants et éventuellement de constituants secondaires tels que des antioxydants, puis on comprime en totalité le mélange ainsi obtenu pour obtenir des comprimés, puis on le soumet à un durcissement à des températures de 120 à 200°C.

36. Procédé selon la revendication 34,
**caractérisé en ce**
**qu'**on ajoute de la poix au mélange du matériau minéral de type oxyde et du support carboné, éventuellement dans un mélangeur pouvant être chauffé, et on homogénéise la totalité du mélange, et on ajoute au mélange des réactifs réticulants pour la poix, puis on comprime le mélange pour obtenir des comprimés, et les comprimés sont ensuite recuits à une température de 200 à 300°C jusqu'à une réticulation suffisante de la poix.

37. Procédé de fabrication d'un comprimé réfractaire selon l'une ou plusieurs des revendications 1 à 3,
**caractérisé en ce que**
l'Al₂O₃ et le CaO sont éventuellement finement broyés, mélangés ensemble puis transformés en pellets, briquettes, comprimés, ou sont façonnés d'une autre manière appropriée, à l'occasion de quoi on classe ces ébauches ayant différentes tailles, et on réalise une bande granulométrique voulue à partir de plusieurs fractions granulométriques classées, puis on mélange jusqu'à homogénéité et éventuellement on ajoute un liant tel qu'une lessive de sulfite usée, puis on comprime la totalité du mélange pour obtenir des comprimés, les comprimés étant, après la compression, soumis à une cuisson céramique à une température allant jusqu'à 1750°C.

38. Utilisation d'une barbotine selon l'une ou plusieurs des revendications 16 à 33 pour fabriquer des comprimés pressés.

39. Utilisation d'une barbotine selon l'une ou plusieurs des revendications 16 à 33 pour fabriquer des comprimés tassés.

40. Utilisation d'une barbotine selon l'une ou plusieurs des revendications 16 à 33 en tant que masse de tassement, de pistolage ou de réparation.
